Europäisches Patentamt

European Patent Office

Office européen des brevets

(11) Veröffentlichungsnummer: **0 268 699**
**A1**

# EUROPÄISCHE PATENTANMELDUNG

(21) Anmeldenummer: 86116331.9

(22) Anmeldetag: 25.11.86

(51) Int. Cl.⁴: **A01B 3/421** , F15B 11/12

(43) Veröffentlichungstag der Anmeldung:
**01.06.88 Patentblatt  88/22**

(84) Benannte Vertragsstaaten:
**AT DE FR GB IT NL SE**

(71) Anmelder: **Rabewerk Heinrich Clausing**

**D-4515 Bad Essen 1(DE)**

(72) Erfinder: **Schröer, Friedrich, Dipl.-Ing.
Im Weidengrund 5
D-4515 Bad Essen 1(DE)**

(74) Vertreter: **Missling, Arne, Dipl.-Ing. et al
Patentanwälte Dipl.-Ing. R. Schlee Dipl.-Ing.
A. Missling Bismarckstrasse 43
D-6300 Giessen(DE)**

(54) **Drehpflug mit einer Vorrichtung für die stufenlose Einstellung der Verkantung.**

(57) Drehpflüge mit einem Pfiugvordergestell, bei denen im Pflugvordergestell der Pflugrahmen drehbar gelagert ist, der mit Hilfe einer von einem Hydraulikzylinder betätigten Dreheinrichtung von der einen in die andere Arbeitsstellung verschiebbar ist und dessen Arbeitsstellung und damit seine Lage relativ zum Pflugvordergestell zur Einstellung der Verkantung des Pflugrahmens frei wählbar ist, haben, damit die Verkantung des Pflugrahmens eingestellt werden kann, ohne daß der Fahrer anzuhalten und vom Schlepper abzusteigen braucht, als Hydraulikzylinder (I7) eine Kolbenzylindereinheit, bei der auf der Kolbenstange (I9) der Kolbeneinheit ein zweiter Kolben (2I) frei verschiebbar angeordnet ist. Die drei voneinander getrennten Räume (22, 23, 24) des Zylinders sind unabhängig voneinander mit Drucköl versorgbar, wobei zur Einstellung der Endlagen der Drehvorrichtung und damit der Verkantung der Abstand des zweiten Kolbens (2I) zu den Enden des Zylinders (I8) oder aber der Abstand der Kolben untereinander einstellbar und festlegbar ist.

*Fig. 3*

EP 0 268 699 A1

# Drehpflug mit einer Vorrichtung für die stufenlose Einstellung der Verkantung

Die Erfindung betrifft einen Drehpflug mit einem Pflugvordergestell, mit einem drehbar im Pflugvordergestell gelagerten Pflugrahmen, der mit Hilfe einer von einem Hydraulikzylinder betätigten Dreheinrichtung von der einen in die andere Arbeitsstellung verschwenkbar ist und dessen Arbeitsstellung und damit seine Lage relativ zum Pflugvordergestell zur Einstellung der Verkantung des Pflugrahmens frei wählbar ist.

Für die Einstellung der Verkantung des Pflugrahmens relativ zum Pflugvordergestell auf die unterschiedlichen Pflügtiefen dienen Spindeln, die als Endanschläge für den Pflugrahmen in seinen beiden Arbeitsstellungen dienen. Diese Spindeln werden in der Regel von Hand verstellt, so daß die Verkantung den erforderlichen Gegebenheiten angepaßt werden kann. Die Einstellung der Verkantung bei konventionellen Drehpflügen erfordert somit, daß der Fahrer vom Schlepper absteigt und die beiden Spindeln gleichsinnig verstellt, so daß in beiden Arbeitsrichtungen die gleiche Verkantung des Pflugrahmens erhalten wird. Diese Verkantung muss dann beim anschließenden Pflügen überprüft werden, wobei es u.U. ein oder mehrmals notwendig sein kann, die Verkantung entsprechend zu korrigieren, wozu der Fahrer mehrmals absteigen muß. Das Einstellen der Verkantung ist relativ zeitaufwendig und verringert so die mögliche Arbeitsleistung des Pfluges.

Der Erfindung liegt die Aufgabe zugrunde, einen Drehpflug der eingangs genannten Art so auszubilden, daß die Verkantung des Pflugrahmens relativ zum Pflugvordergestell eingestellt werden kann, ohne daß der Fahrer anzuhalten und vom Schlepper abzusteigen braucht und darüberhinaus die bisher notwendigen verstellbaren Anschläge entfallen.

Diese Aufgabe wird mit den Merkmalen des Anspruches I gelöst.

Gemäß der Erfindung wird als Hydraulikzylinder für die Dreheinrichtung eine Kolbenzylindereinheit verwendet, bei der auf der Kolbenstange der Kolbeneinheit ein zweiter Kolben frei verschiebbar ist, wobei die drei voneinander getrennten und durch die beiden Kolben im Zylinder gebildeten Räume unabhängig voneinander mit Drucköl beaufschlagbar sind, wobei ein Raum mit einer vorgegebenen Menge an Drucköl gefüllt und anschließend abgesperrt wird, so daß die Größe des Raumes bei Betätigung der beiden anderen im Hydraulikzylinder gebildeten Räume unverändert bleibt. Durch diesen dritten im Hydraulikzylinder gebildeten Raum kann die Ausfahrlänge des Hydraulikzylinders eingestellt werden, so daß die Endstellung des Hydraulikzylinders gleichzeitig die Arbeitsstellung des Pflugrahmens bildet. Für die Verstellung der Ausfahrlänge des Hydraulikzylinders und damit zur Einstellung der Verkantung muß lediglich das Volumen des dritten Raumes entsprechend verändert werden. Je nachdem ob das Volumen vergrößert oder verkleinert wird, kann die Verkantung entsprechend vergrößert oder verkleinert werden. Die bisher benötigten einstellbaren und mit Spindeln versehenen Endanschläge können somit entfallen. Die Einstellung der Verkantung kann vom Schleppersitz ohne irgendeinen Zeitverlust und ohne mehrmalige Einstellungswiederholungen auch während der Fahrt erfolgen, wobei lediglich die Betätigung eines zusätzlichen Steuerventils, das in der Regel als Zweiwegeventil ausgebildet ist, erforderlich ist. Die Einstellung der Verkantung kann unmittelbar an den soeben gewendeten Erdbalken überprüft werden, wobei, da die Verkantung durch die Ausfahrlänge des Hydraulikzylinders bestimmt ist, diese Verkantung für beide Arbeitsstellungen in einem Arbeitsgang einstellbar ist.

Ein Hydraulikzylinder, der für eine Dreheinrichtung für einen erfindungsgemäß ausgebildeten Drehpflug geeignet ist, ist z.B. aus der FR-PS I 596 6I7 bzw. aus der US-PS 3 I68 853 bekannt.

Die Speisung des zwischen den beiden Kolben gebildeten Raumes im Hydraulikzylinder erfolgt in bekannter Art und Weise durch die Kolbenstange, wobei die Öffnung für das Hydrauliköl in der Kolbenstange vorteilhaft unmittelbar in der Nähe des starr auf der Kolbenstange befestigten Kolbens angeordnet ist. Gemäß einem Vorschlag der Erfindung ist zumindest eine der einander zugewandten Seiten der Kolben mit einer Ausnehmung versehen. So ist sichergestellt, daß die beiden Kolben dicht gegeneinander verfahren werden können.

Was den Raum betrifft, dessen Volumen nur zur Einstellung der Verkantung verändert wird, so kann dies der Raum sein, der zwischen den beiden Kolben ausgebildet ist oder aber der Raum, der zwischen dem auf der Kolbenstange verschiebbar angeordneten Kolben und der diesem zugeordneten Stirnwand des Zylinders liegt. Der letztere Raum ist vorteilhafter als der zwischen den Kolben ausgebildete Raum, denn in diesem Fall ist beim Wenden der Pflugkörper dieser zweite Kolben relativ zur Zylinderwand fixiert gehalten.

Jeder der drei im Hydraulikzylinder gebildeten Räume ist mit einer gesonderten Druckölleitung verbunden, die mit ihren anderen Ende an am Schlepper angeordneten Steuerventilen angeschlossen ist. Bei diesen Steuerventilen handelt es sich in der Regel um Zweiwegeventile, wobei zwei Zweiwegeventile, die ohnehin am Schlepper angeordnet sind, für die Steuerung des Hydraulikzylinders für das Wenden der Pflugkörper sowie für die Einstellung der Verkantung ausreichend sind. Im einfachsten Fall können auch zwei Räume der Drucköllleitungen an ein Steuerventil angeschlossen werden, das entweder die eine oder die andere Leitung mit dem nachgeordneten Steuerventil verbindet. Die Druckölversorgungsleitung des dritten Raumes ist dann unmittelbar mit dem nachgeschalteten Steuerventil verbunden. Zum Wenden der Pflugkörper muß lediglich das eine Steuerventil betätigt werden. Soll die Verkantung geändert werden, so muß nur das nachgeschaltete Steuerventil die eine oder die andere Leitung freigeben, wodurch dann durch Betätigung des nachgeschalteten Steuerventils die Verkantung einstellbar ist.

Weitere vorteilhafte Ausgestaltungen der Erfindung gehen aus den Unteransprüchen in Verbindung mit Beschreibung und Zeichnung hervor.

Zwei Ausführungsbeispiele der Erfindung sind im folgenden anhand der Zeichnung näher beschrieben. In dieser zeigen:

Fig. I eine Draufsicht auf einen erfindungsgemäß ausgebildeten Pflug,

Fig. 2 einen Hydraulikzylinder der Dreheinheit in schematischer Darstellung,

Fig. 3 ein weiteres Ausführungsbeispiel einer Schaltung eines hydraulischen Drehzylinders der Dreheinheit und

Fig. 4 ein Detail der Fig. 3.

In Fig. I ist der Drehpflug in Draufsicht dargestellt mit seinem Pflugvordergestell I und seinem drehbar im Pflugvordergestell I gelagerten Pflugrahmen 2. Das Pflugvordergestell I weist Zapfen 3, 4 für die Anlenkung der Unterlenker sowie einen Turm 5 für die Anlenkung eines Oberlenkers eines nicht dargestellten Schleppers auf.

Im Pflugvordergestell I ist die Drehachse 6 gelagert, an der der Pflugrahmen 2 über eine lotrechte Achse 7 und eine Schnittbreiteneinstelleinrichtung 8 angeschlossen ist. Die Schnittbreiteneinstelleinrichtung besteht aus einer Kulisse 9 sowie einem Kulissenstein I0, wobei der Kulissenstein I0 über eine Verstelleinrichtung II in der Kulisse 9 verschiebbar ist. Der Pflugrahmen 2 ist seinerseits über ein Spannschloß I2 am Kulissenstein I0 abgestützt. Am Pflugrahmen sind Konsolen I3 angeordnet, die die Pflugkörper I4 tragen.

Zum Wenden des Pflugrahmens 2 dient eine Dreheinrichtung, die aus zwei Zapfen I5, I6 und einem nicht dargestellten Hydraulikzylinder I7 besteht, der an den beiden Zapfen I5, I6 angreift. Der Zapfen I6 ist am Turm 5 des Pflugvordergestells I angeordnet, während der Zapfen I5 an der Kulisse der Schnittbreitenverstelleinrichtung 8 befestigt ist.

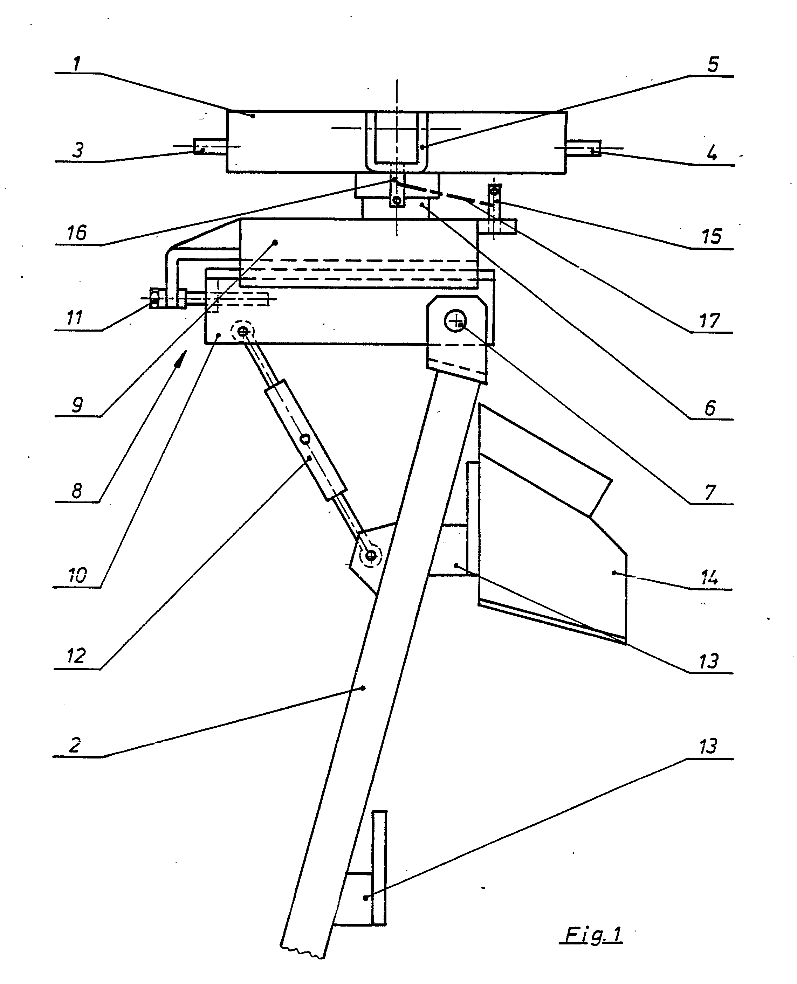

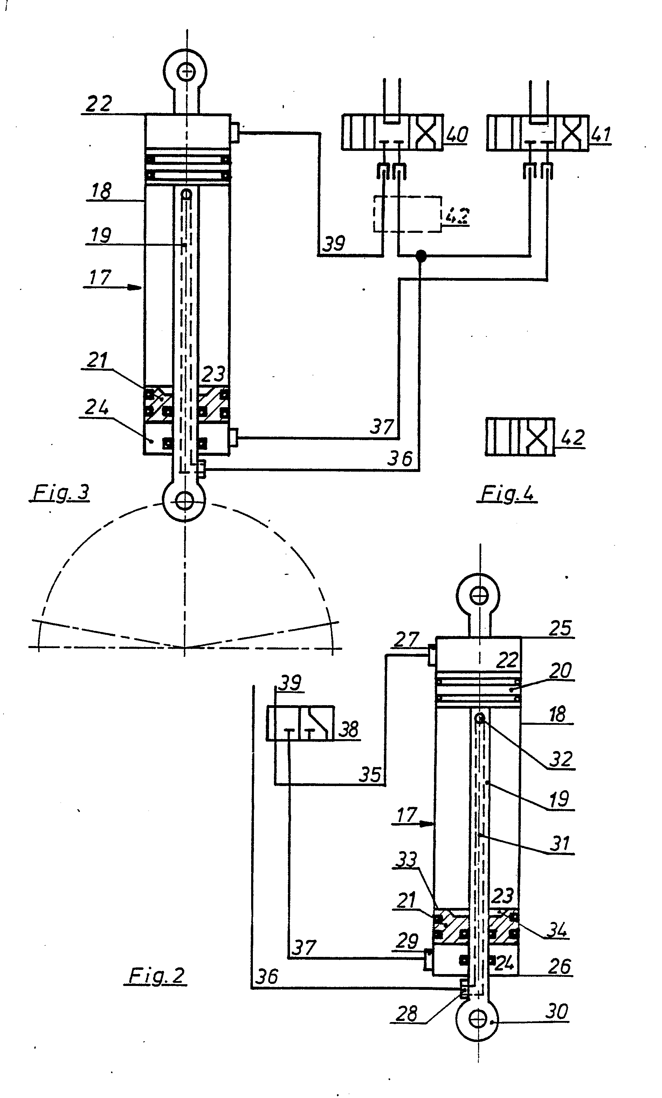

Der Hydraulikzylinder I7 zum Wenden des Pflugrahmens 2 ist in den Fig. 2 und 3 dargestellt. Der Hydraulikzylinder I7 in Fig. 2 besteht aus einem Zylinder I8 sowie einer Kolbenstange I9 mit einem hieran fest verbundenen ersten Kolben 20. Auf der Kolbenstange I9 ist ein zweiter Kolben 2I verschiebbar angeordnet.

Die beiden Kolben 20 und 2I bilden im Hydraulikzylinder I7 drei voneinander abgetrennte Räume 22, 23, 24. Der erste Raum 22 wird zwischen dem Kolben 20 und der Stirnfläche 25 gebildet, der zweite Raum 23 zwischen den beiden Kolben 20 und 2I und der dritte Raum 24 zwischen dem Kolben 2I und der anderen Stirnfläche 26 des Zylinders I8.

Jeder der drei Räume 22, 23, 24 ist mit einem eigenen Druckölanschluß 27, 28 und 29 versehen. Die Druckölanschlüsse 27 und 29 sind konventionell ausgebildet, während der Druckölanschluß 28 in der Kolbenstange I9 in der Nähe des Befestigungsauges 30 liegt. Die Kolbenstange I9 weist eine Bohrung 3I auf, die in einer Querbohrung 32 mündet, die in der Nähe des Kolbens 20 angeordnet ist. Der zweite Kolben 2I, der auf der Kolbenstange I9 verschiebbar ist, weist auf seiner dem Kolben 20 zugewandten Fläche 33 eine Ausnehmung 34 auf, wodurch sichergestellt ist, daß die beiden Kolben unmittelbar gegeneinander verfahren werden können.

An den Druckölanschluß 27 ist eine Druckölleitung 35, an den Druckölanschluß 28 eine Druckölleitung 36 und an den Druckölanschluß 29 eine Druckölleitung 37 angeschlossen. In dem gezeigten Ausführungsbeispiel sind die beiden Druckölleitungen 35 und 37 des ersten und dritten Raumes 22 und 24 an ein Steuerventil 38 angeschlossen, das den Durchgang zu einer Druckölversorgungsleitung 39 entweder mit der Leitung 35 oder mit der Leitung 37 herstellt. Die beiden Leitungen 36 und 39 sind dann an ein zweites, nachgeschaltetes Steuerventil 40 angeschlossen, das als Zweiwegeventil ausgebildet ist und in Fig. 3 dargestellt ist. Bei der in Fig. 2 gezeigten Stellung ist die Leitung 37 abgesperrt, so daß der Kolben 2I im Zylinder I8 blockiert ist. Wird die Leitung 39 und damit die Leitung 35 mit Drucköl beaufschlagt, so wird der Kolben 20 solange nach unten verschoben, bis dieser am Kolben 2I anliegt, der einen Anschlag für den Kolben 20 bildet und die Ausfahrlänge begrenzt. In dieser ausgefahrenen Stellung ist bei dem in Fig. I dargestellten Drehpflug die Arbeitsstellung erreicht. Der verschiebbare Kolben 2I bildet somit den Anschlag für die Fixierung der Arbeitsstellung des Drehpfluges und damit der Verkantung des Pflugrahmens 2 zum Pflugvordergestell I. Soll die Verkantung verändert werden, so muß der Kolben 2I im Zylinder I8 verschoben werden. Dies geschieht im Ausführungsbeispiel nach Fig. 2 dadurch, daß das Steuerventil 38 umgeschaltet wird, so daß nunmehr Drucköl in den Raum 24 eingedrückt oder aus diesem herausgedrückt werden kann. Entsprechend ändert sich die Stellung des Kolbens 21 relativ zum Zylinder 18 und somit die Ausfahrlänge der Kolbenstange 19. Nach erfolgter Einstellung der Verkantung wird das Steuerventil 38 wieder in die in Fig. 2 gezeigte Position zurückgestellt. Zur Verminderung der Länge der Schlauchleitungen kann das Steuerventil 38 auch am Pflug und in der Nähe des Hydraulikzylinders 17 angeordnet sein. Allerdings kann dann die Einstellung vom Schleppersitz aus nur noch bedingt erfolgen.

In Fig. 3 sind gleiche Teile mit gleichen Bezugszeichen versehen. Dieses Ausführungsbeispiel unterscheidet sich von dem nach Fig. 2 in der Schaltung, und zwar sind hier zur Steuerung des Hydraulikzylinders 17 zwei Zweiwegeventile vorgesehen. An das Zweiwegeventil 40 sind wiederum die beiden Leitungen 36 und 39 angeschlossen, die mit den Räumen 22 und 23 verbunden sind. Solange das zweite Steuerventil 41 in der geschlossenen, d.h. in der dargestellten Stellung verbleibt, bleibt der Abstand des Kolbens 21 relativ zur Zylinderwand 18 unverändert, so daß hier die Ausfahrlänge der Kolbenstange 19 fixiert ist, wie dies anhand des Ausführungsbeispiels nach Fig. 2 beschrieben ist. Zur Einstellung der Verkantung wird das zweite Steuerventil 41 geöffnet, so daß entweder Drucköl in den Raum 24 eingedrückt und aus dem Raum 23 herausgedrückt werden kann, oder aber umgekehrt, je nachdem ob die Ausfahrlänge der Kolbenstange 19 vergrößert oder verkleinert werden soll. Fig. 4 zeigt das automatische Umschaltventil 42, mit dem in bekannter Art und Weise im oberen Umkehrbereich die jeweils andere Leitung mit Drucköl versorgt wird und das - schaltungsmäßig in der Regel hinter dem Zweiwegeventil 40 angeordnet ist.

Die beiden Steuerventile 40, 41 wie auch das Steuerventil 38 sind am Schlepper angeordnet, so daß nicht nur das Wenden der Pflugkörper vom Schlepper aus erfolgen kann, sondern auch die Einstellung der Verkantung. Das Ergebnis der Verkantung kann unmittelbar kontrolliert und gegebenenfalls auch beim Pflügen verändert werden. Verstellbare Endanschläge, wie sie bisher erforderlich waren, können entfallen.

## Ansprüche

1. Drehpflug mit einem Pflugvordergestell, mit einem drehbar im Pflugvordergestell gelagerten Pflugrahmen, der mit Hilfe einer von einem Hydraulikzylinder betätigten Dreheinrichtung von der einen in die andere Arbeitsstellung verschwenkbar ist und dessen Arbeitsstellung und damit seine Lage relativ zum Pflugvordergestell zur Einstellung der Verkantung des Pflugrahmens frei wählbar ist, dadurch gekennzeichnet, daß als Hydraulikzylinder (17) eine Kolbenzylindereinheit verwendet wird, bei der auf der Kolbenstange (19) der Kolbeneinheit ein zweiter Kolben (21) frei verschiebbar angeordnet ist, daß die drei durch die beiden relativ zueinander verschiebbaren Kolben (20, 21) getrennten Räume (22, 23, 24) unabhängig voneinander mit Drucköl versorgbar oder absperrbar sind und daß zur Einstellung der Endlagen der Drehvorrichtung und damit der Verkantung des Pflugrahmens (2) zum Pflugvordergestell (1) der Abstand des zweiten Kolbens (21) zu den Enden des Zylinders (18) oder aber der Abstand der Kolben untereinander einstellbar und festlegbar ist.

2. Drehpflug nach Anspruch 1, dadurch gekennzeichnet, daß die Öffnung (32) für die Zuführung des Drucköls zu dem zweiten Raum (23) zwischen den beiden Kolben (20, 21) durch die Kolbenstange (19) geführt ist und unmittelbar vor dem ersten, auf der Kolbenstange (19) starr befestigten Kolben (20) mündet.

3. Drehpflug nach Anspruch 1 oder 2, dadurch gekennzeichnet, daß mindestens eine der einander gegenüberliegenden Stirnflächen des ersten oder zweiten Kolbens (20, 21) mit einer Ausnehmung (34) im Bereich der Kolbenstange (19) versehen ist.

4. Drehpflug nach einem der Ansprüche 1 bis 3, dadurch gekennzeichnet, daß die zum dritten Raum (24) führende Drucköleitung (37), der zwischen dem verschiebbaren zweiten Kolben (21) und dem diesem benachbarten Ende des Zylinders (18) ausgebildet ist, normalerweise abgesperrt ist und nur zur Einstellung der Verkantung an die Drucközuoder -rückleitung (39) angeschlossen ist.

5. Drehpflug nach einem der Ansprüche 1 bis 4, dadurch gekennzeichnet, daß die mit dem ersten Raum (22), der zwischen dem ersten Kolben (20) und der benachbarten Stirnwand (25) des Zylinders (18) gebildet ist und mit dem zwischen den beiden Kolben (20, 21) gebildeten zweiten Raum (23) verbundenen Drucköleitungen (35, 36) je an einen Anschluß eines Steuerventils (40) anschließbar sind.

6. Drehpflug nach Anspruch 5, dadurch gekennzeichnet, daß in die beiden Drucköleitungen (35, 36) eine Umschalteinrichtung für die wechselweise Verbindung der beiden Drucköleitungen (42) mit den entsprechenden Drucköversorgungsleitungen (39) eingeschaltet ist.

7. Drehpflug nach Anspruch 6, dadurch gekennzeichnet, daß die Umschaltung durch die Drehbewegung des Pflugrahmens (2) beim Wenden der Pflugkörper (14) gesteuert ist.

8. Drehpflug nach einem der Ansprüche 1 bis 7, dadurch gekennzeichnet, daß die zum dritten Raum (24) führende Drucköleitung (37) an einem Abgang eines zweiten Steuerventils (41) und die zum zwei-

ten Raum (23) führende Druckölleitung (36) an den anderen Abgang des Steuerventils (4l) angeschlossen ist.

9. Drehpflug nach einem der Ansprüche l bis 7, dadurch gekennzeichnet, daß die Drucköleitungen (35, 37) zum ersten und zum dritten Raum (22, 24) an ein Steuerventil (38) angeschlossen sind, das wahlweise eine der beiden Drucköleitungen (35, 37) mit einem Anschluß eines zweiten Steuerventils (40) verbindet und daß die zum zweiten Raum (23) führende Drucköleitung (36) direkt mit einem weiteren Anschluß des zweiten Steuerventils (40) verbunden ist.

l0. Drehpflug nach einem der Ansprüche l bis 9, dadurch gekennzeichnet, daß die Steuerventile (38, 40, 4l) als Zweiwegeventile ausgebildet sind.

86116331.9

Fig.1

Fig. 3

Fig. 4

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 064 323 (RABEWERK H. CLAUSING) <br> * Insgesamt * | 1-3 | A 01 B 3/421 <br> F 15 B 11/12 |
| | --- | | |
| Y | US-A-2 596 471 (DENSMORE et al.) <br> * Insgesamt * | 1-3 | |
| A | | 4-6,8, 9 | |
| | --- | | |
| A | FR-A- 999 277 (SOCIETE DES ATELIERS DE MECANIQUE ET DE CHAUDRONNERIE DE SAINT-DENIS) <br> * Insgesamt * | 2,3 | |
| | --- | | **RECHERCHIERTE SACHGEBIETE (Int. Cl.4)** |
| A | FR-A-2 558 027 (KVERNELAND A/S) | | A 01 B <br> F 15 B |
| | --- | | |
| A,D | US-A-3 469 503 (ADLER et al.) <br><br> & FR-A-1 596 617 | | |
| | --- | | |
| A,D | US-A-3 168 853 (PRINCE) | | |
| | ----- | | |

Der vorliegende Recherchenbericht wurde für alle Patentansprüche erstellt.

| Recherchenort <br> DEN HAAG | Abschlußdatum der Recherche <br> 23-07-1987 | Prüfer <br> VON ARX V.U. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82